# EUROPÄISCHE PATENTSCHRIFT

(11) **EP 1 650 064 B1**
(45) Veröffentlichungstag und Bekanntmachung des Hinweises auf die Patenterteilung: **18.10.2006**
(21) Anmeldenummer: 04025153.0
(22) Anmeldetag: 22.10.2004
(51) Int. Cl.: B60H 1/26, E05C 17/04

(54) **Distanzstück für die Tür eines Kraftfahrzeugs**
Extender latch for a vehicle door
Entretoise pour une porte d'un véhicule

(43) Veröffentlichungstag der Anmeldung: 26.04.2006
(73) Patentinhaber: Green, Rudolf, 24941 Jarplund-Weding (DE)
(72) Erfinder: Green, Rudolf, 24941 Jarplund-Weding (DE)
(74) Vertreter: Döring, Roger

(56) Entgegenhaltungen:
- DE-C- 164 652
- US-A- 4 322 103
- US-A- 4 593 946
- US-A- 5 551 738
- US-A- 6 048 005

## Beschreibung

Die Erfindung bezieht sich auf ein Distanzstück mit Halter für eine Tür eines Kraftfahrzeugs.

Kraftfahrzeug im Sinne der Erfindung ist hauptsächlich ein Personenkraftwagen - im folgenden kurz "PKW" genannt. Die weiteren Erläuterungen gelten - stellvertretend auch für alle anderen Kraftfahrzeuge - für einen PKW. Während des Betriebes ist ein PKW in der Regel ausreichend belüftet, und zwar durch Lüftungsschlitze, einen Ventilator, eine Klimaanlage, ein geöffnetes Schiebedach oder durch geöffnete Fenster. Diese Belüftung entfällt, wenn der PKW geparkt ist. Bei höheren Außentemperaturen und/oder Sonneneinstrahlung können im Fahrgastraum bei einem geparkten PKW schnell hohe Temperaturen entstehen. Das macht sich für den Benutzer des PKWs unliebsam bemerkbar, wenn er zum Fahren in ein aufgeheiztes Fahrzeug einsteigt. Eine hohe Innentemperatur im PKW ist aber besonders dann von Nachteil, wenn beispielsweise ein Tier im PKW zurückgelassen werden soll, auch wenn das nur für einen kurzen Zeitraum beabsichtigt ist.

US 4 593 946 zeigt ein Distanzstück gemäß dem Oberbegriff des Anspruchs 1.

Die US 5 551 738 A beschreibt ein Distanzstück zum Offenhalten eines Fensters eines PKWs. Es besteht aus einem etwa U-förmigen Bauteil aus strangförmigem, federndem Metall mit einer Basis und zwei von derselben ausgehenden Schenkeln, die an ihren freien Enden abgebogen sind, und zwar mit entgegengerichtetem Verlauf. In Montageposition ist der Basisteil des Distanzstücks in einem an der Karosserie des PKWs angebrachten Schloß verriegelt, während die abgebogenen Enden der Schenkel in die Öffnung eines an einer Glasscheibe angebrachten Halters eingreifen. Die Öffnung kann trapezförmig gestaltet sein und die Enden der beiden Schenkel federn in Montageposition in zwei einander gegenüber liegende Ecken der Öffnung hinein. Der Halter kann auch aus einem U-förmig gebogenen Strangmaterial bestehen, mit dem die Enden der Schenkel des Distanzstücks federnd verklemmt sind.

Mit dem bekannten Distanzstück nach der eingangs erwähnten US 4 593 946 A kann die Tür eines PKWs zur Durchführung von Arbeiten an demselben zumindest teilweise offen gehalten werden. Das Distanzstück ist mit einem Ende schwenkbar am Türschloß zu befestigen. Es kann mit seinem anderen Ende in ein an der Karosserie des PKWs angebrachtes Halteelement eingehängt werden, in das bei geschlossener Tür das Türschloß eingreift. Das Distanzstück kann jederzeit vom Halteelement der Karosserie gelöst werden, auch wenn es mit seinem anderen Ende im Türschloß befestigt bleibt. Ein ähnliches Distanzstück geht aus der US 4 422 103 A hervor.

Der Erfindung liegt die Aufgabe zugrunde, das eingangs beschriebene Distanzstück so zu gestalten, daß es bei in Parkposition wirksam verschlossenem PKW eine ausreichende Belüftung des Fahrgastraums ermöglicht und nicht mutwillig aus seiner eine Tür des PKWs offen haltenden Position entfernt werden kann.

Diese Aufgabe wird entsprechend den kennzeichnenden Merkmalen des Patentanspruchs 1 gelöst.

Mit diesem Distanzstück kann die Tür eines PKWs, bei welcher es sich um eine Seitentür oder eine Heckklappe handeln kann, in einer Offenstellung arretiert werden, welche einen Spalt zwischen der Tür und der Karosserie des PKWs frei läßt. Die Breite des Spalts wird von der Länge des Distanzstücks bestimmt. Sie wird zweckmäßig nach der für die Belüftung des Fahrgastraums jeweils gewünschten Luftmenge ausgewählt. Das Distanzstück greift mit seinem einen axialen Ende mit dem dort vorhandenen Haken in das an der Karosserie des PKWs befestigte Halteelement ein. Wenn der Haken beispielsweise etwa U-förmig gebogen ist, kann er in der der Offenstellung der Tür entsprechenden Schließstellung nicht von dem Halteelement gelöst werden. Das Distanzstück ist an seinem anderen axialen Ende durch den dort befindlichen, dem Halteelement angepaßten Halter in dieser Schließstellung fest im Türschloß verankert, so daß er ohne autorisiertes Öffnen des Türschlosses nicht aus demselben entfernt werden kann. Der Halter des Distanzstücks stellt also eine der axialen Länge desselben entsprechende Verlängerung des Halteelements dar. Die Tür des PKWs ist bei eingesetztem Distanzstück und geschlossenem Türschloß somit in gleicher Weise abgeschlossen, als ob sie ohne Distanzstück in das Halteelement eingreift. Eine ausreichende Belüftung des Fahrgastraums ist damit auf einfache aber sichere Art und Weise erreicht. Das vorzugsweise aus Hartmetall bestehende Distanzstück hat ein gegenüber dem Haken und dem Halter dickeres, stabförmiges Bauteil, an dessen axialen Enden der Haken einerseits und der Halter andererseits angebracht sind. Beide Elemente können lösbar mit dem stabförmigen Bauteil verbunden sein.

Ein Ausführungsbeispiel des Erfindungsgegenstandes ist in den Zeichnungen dargestellt.

Es zeigen:
Fig. 1 ein Distanzstück nach der Erfindung in seiner Montageposition in schematischer Darstellung.
Fig. 2 eine Ansicht des Distanzstücks in vergrößerter Darstellung.

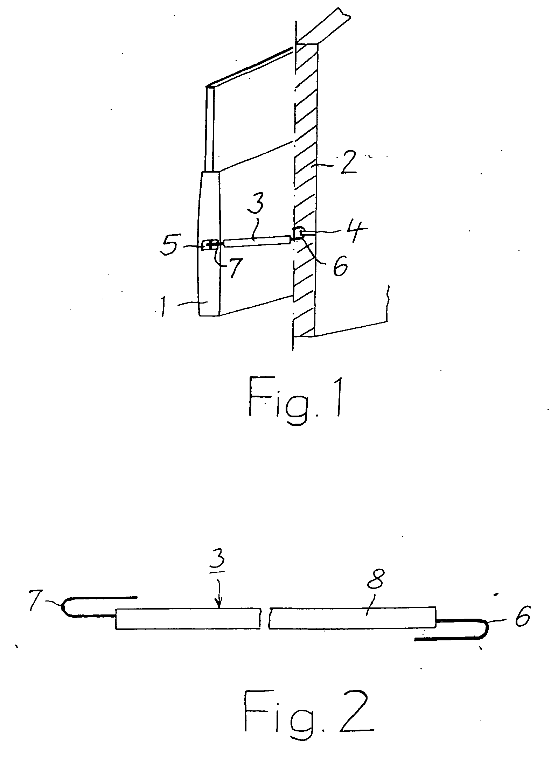

In Fig. 1 ist ein Ausschnitt einer Tür 1 und einer Karosserie 2 eines PKWs in stark schematisierter Darstellung gezeigt. Zwischen beiden Teilen ist ein langgestrecktes Distanzstück 3 aus mechanisch stabilem Material angebracht. Es greift einerseits in ein fest mit der Karosserie 2 verbundenes, üblicherweise bügelförmiges Halteelement 4 und andererseits in ein Türschloß 5 der Tür 1 ein. Das Türschloß 5 ist grundsätzlich bekannt und daher in Fig. 1 nur angedeutet. Das Distanzstück 3 hält die Tür 1 auf Abstand zur Karosserie 2, so daß zwischen beiden Teilen ein Spalt verbleibt, der den Durchtritt von Luft zur Belüftung des Fahrgastraums ermöglicht. Es besteht aus Metall und in bevorzugter Ausführungsform aus Hartmetall. Geeignet sind beispielsweise nichtrostender Stahl oder V2A-Stahl. Das Distanzstück 3 kann auch einen Überzug aus Kunststoff haben.

Das Distanzstück 3 kann an jeder Tür eines PKWs montiert werden, und zwar auch an einer Heckklappe. Seine axiale Länge ist variabel, so daß unterschiedlich breite Spalte zwischen Tür 1 und Karosserie 2 eingestellt werden können. Bei montiertem Distanzstück 3 und geschlossenem Türschloß 5 ist die betreffende Tür des PKWs ebenso sicher verschlossen, als wenn das Türschloß 5 ohne Distanzstück 3 in das Halteelement 4 eingreift.

Gemäß Fig. 2 besteht das Distanzstück 3 aus einem stabförmigen Bauteil 8 aus Metall. Es weist an seinem einen axialen Ende einen in bevorzugter Ausführungsform etwa U-förmig gebogenen Haken 6 und an seinem anderen Ende einen Halter 7 auf, der an das Halteelement 4 angepaßt ist. Dabei kann der Halter 7 die gleiche Form wie das Halteelement 4 haben. Er kann dazu beispielsweise etwa U-förmig gebogen oder als Öse ausgeführt sein. Wichtig ist nur, daß das mit dem Halteelement 4 verriegelbare Türschloß 5 in gleicher Weise mit dem Halter 7 verriegelt werden kann.

Zu seiner Montage wird das Distanzstück 3 mit seinem Haken 6 in das Halteelement 4 eingehängt und mit seinem Halter 7 in das Türschloß 5 eingelegt, das dann verschlossen wird. Sowohl Haken 6 als auch Halter 7 sind so dimensioniert, daß das Distanzstück 3 bei verschlossener Tür 1 weder aus dem Halteelement 4 noch aus dem Türschloß 5 entfernt werden kann.

Das stabförmige Bauteil 8 hat größere radiale Abmessungen als der Haken 6 und der Halter 7. Beide Teile sind - an je einem axialen Ende des dickeren Bauteils 8 angebracht. Ein solches Distanzstück 3 bietet eine erhöhte Sicherheit gegen ein gewaltsames Entfernen, beispielsweise mittels eines Bolzenschneiders. Haken 6 und Halter 7 können jeweils in das stabförmige Bauteil 8 eingeschraubt und so lösbar mit demselben verbunden sein.

Das stabförmige Bauteil 8 kann bei Verwendung eines entsprechenden Materials auch in seiner axialen Länge veränderbar sein, wenn es beispielsweise bei intensiver Sonneneinstrahlung seine Länge durch thermische Ausdehnung vergrößert und nach Abkühlung wieder verkleinert.

## Patentansprüche

1. Distanzstück (3) mit Halter (7) zur Fixierung einer Tür (1) eines Kraftfahrzeugs in einer Offenstellung, das zur Aufnahme in einem Türschloß der Tür (1) einerseits und zum Eingriff in ein an der Karosserie des Kraftfahrzeugs fest angebrachtes Halteelement (4) andererseits ausgebildet ist, welches aus Metall besteht und an seinem einen axialen Ende einen an dem Halteelement (4) anbringbaren Teil und an seinem anderen axialen Ende den der Form des Halteelements (4) angepaßten und in das Türschloß (5) passenden Halter (7) aufweist, **dadurch gekennzeichnet, dass**:
- das Distanzstück (3) als stabförmiges Bauteil (8) ausgeführt ist, an dessen axialen Enden ein Haken (6) einerseits und der Halter (7) andererseits angebracht sind,
- das stabförmige Bauteil (8) gegenüber dem Haken (6) und dem Halter (7) größere radiale Abmessungen aufweist und
- der in der der Belüftung des Fahrzeugs dienenden Offenstellung, in welcher der Halter (7) des Distanzstücks (3) fest im Türschloß (5) verankert ist, in das Halteelement (4) eingreifende Haken (6) so ausgeführt ist, daß er nicht vom Halteelement (4) lösbar ist.

2. Distanzstück nach Anspruch 1, **dadurch gekennzeichnet, dass** der Halter (7) etwa U-förmig gebogen ist.

3. Distanzstück nach Anspruch 1, **dadurch gekennzeichnet, dass** der Halter (7) als Öse ausgeführt ist.

4. Distanzstück nach einem der Ansprüche 1 bis 3, **dadurch gekennzeichnet, dass** Haken (6) und Halter (7) lösbar mit dem stabförmigen Bauteil (8) verbunden sind.

5. Distanzstück nach einem der Ansprüche 1 bis 4, **dadurch gekennzeichnet, dass** die axiale Länge des stabförmigen Bauteils (8) veränderbar ist.

6. Distanzstück nach einem der Ansprüche 1 bis 6, **dadurch gekennzeichnet, dass** es aus Hartmetall besteht.

## Claims

1. Spacer (3) with a holder (7) for fixing a door (1) of a motor vehicle in an open position, which spacer is designed for receiving in a door lock of the door (1), on the one hand, and for engagement in a holding element (4) attached fixedly to the motor vehicle bodywork, on the other hand, is composed of metal and, at its one axial end, has a part which can be attached to the holding element (4) and, at its other axial end, has the holder (7) which is matched to the shape of the holding element (4) and fits into the door lock (5), **characterized in that**:
- the spacer (3) is designed as a bar-shaped component (8) to the axial ends of which a hook (6) is attached at one end and the holder (7) at the other end,
- the bar-shaped component (8) has larger radial dimensions than the hook (6) and the holder (7), and
- the hook (6) which engages in the holding element (4) in the open position, which serves to ventilate the vehicle and in which the holder (7) of the spacer (3) is anchored fixedly in the door lock (5), is designed in such a manner that it cannot be detached from the holding element (4).

2. Spacer according to Claim 1, **characterized in that** the holder (7) is bent approximately in a U-shaped manner.

3. Spacer according to Claim 1, **characterized in that** the holder (7) is designed as an eye.

4. Spacer according to one of Claims 1 to 3, **characterized in that** hook (6) and holder (7) are connected detachably to the bar-shaped component (8).

5. Spacer according to one of Claims 1, to 4, **characterized in that** the axial length of the bar-shaped component (8) can be changed.

6. Spacer according to one of Claims 1 to 5, **characterized in that** it is composed of hard metal.

## Revendications

1. Pièce d'écartement (3) avec support (7) pour la fixation d'une porte (1) d'un véhicule en position ouverte, qui est formée pour le logement dans une serrure de porte (1) d'une part et pour un engagement d'autre part dans un élément de retenue (4) positionné fixement au niveau de la carrosserie du véhicule, laquelle est fabriquée en métal et qui possède, au niveau de l'une de ses extrémités axiale une pièce positionnable au niveau de l'élément de retenue (4) et au niveau de l'autre de ses extrémités, le support (7) adapté à la forme de l'élément de retenue (4) et entrant dans la serrure de porte (5), **caractérisé en ce que** :
- la pièce d'écartement (3) est réalisée comme composant de construction (8) ayant la forme d'une barre, un crochet (6) étant installé sur l'une de ses extrémités axiales et le support (7) sur l'autre de ses extrémités,
- le composant de construction (8) possède des dimensions radiales supérieures à celles du crochet (6) et du support (7) et
- le crochet (6) en prise dans l'élément de retenue (4) de l'ouverture servant à la ventilation du véhicule, dans laquelle le support (7) de la pièce d'écartement (3) est fixement ancré dans la serrure de porte (5), est réalisé de telle façon qu'il ne peut pas être libéré par l'élément de retenue (4).

2. Pièce d'écartement selon la revendication 1, **caractérisée en ce que** le support (7) a à peu près la forme d'un U.

3. Pièce d'écartement selon la revendication 1, **caractérisée en ce que** le support (7) est réalisé en tant qu'oeillet.

4. Pièce d'écartement selon l'une des revendications 1 à 3, **caractérisée en ce que** le crochet (6) et le support (7) sont reliés de manière amovible avec le composant de construction (8) en forme de barre.

5. Pièce d'écartement selon l'une des revendications 1 à 4, **caractérisée en ce que** la longueur axiale du composant de construction (8) en forme de barre peut être modifiée.

6. Pièce d'écartement selon l'une des revendications 1 à 5, **caractérisée en ce qu'**elle est fabriquée en métal dur.
